# EUROPEAN PATENT SPECIFICATION

(11) **EP 3 840 932 B1**
(45) Date of publication and mention of the grant of the patent: **06.12.2023**
(21) Application number: 18930769.7
(22) Date of filing: 24.08.2018
(51) Int. Cl.: B29C 64/118, B29C 71/00, B29C 51/10, B29C 45/18, B29C 64/264, B33Y 30/00, B33Y 10/00, B33Y 80/00, A61C 7/08

(54) **METHOD AND APPARATUS FOR 3D PRINTING AN ORTHODONTIC ALIGNER**
VERFAHREN UND VORRICHTUNG ZUM 3D-DRUCKEN EINER KIEFERORTHOPÄDISCHEN AUSRICHTVORRICHTUNG
PROCÉDÉ ET APPAREIL D'IMPRESSION 3D D'UN ALIGNEUR ORTHODONTIQUE

(43) Date of publication of application: 30.06.2021
(73) Proprietor: Structo Pte. Ltd., Singapore 348615 (SG)
(72) Inventor: VAN ESBROECK, Hubertus Theodorus Petrus, Singapore 348615 (SG); SHARMA, Devansh, Singapore 348615 (SG); LAM, Siu Hon, Singapore 348615 (SG); CHIN, Kah Fai, Singapore 348615 (SG); SUWONO, Boyle, Singapore 348615 (SG)
(74) Representative: Optimus Patents Limited
(86) International application number: PCT/SG2018/050428
(87) International publication number: WO 2020/040691

(56) References cited:
- CN-A- 107 187 025
- US-A- 6 082 995
- US-A1- 2004 154 625
- US-A1- 2005 023 710
- US-A1- 2005 023 710
- US-A1- 2008 050 692
- US-A1- 2011 223 565
- US-A1- 2013 078 594
- US-A1- 2015 182 321
- US-A1- 2016 256 240
- US-A1- 2017 007 368
- US-A1- 2017 008 333
- US-A1- 2017 008 333

## Description

### FIELD

This invention relates to a method and apparatus for forming an orthodontic aligner.

### BACKGROUND

Orthodontic aligners are commonly used to align teeth for aesthetic reasons. Each aligner must be customized to a patient individually as no two patients have identical teeth alignment. Clear aligners that appear nearly invisible when used are particularly popular among users who prefer discreet treatment and there is a significant demand for them globally. Clear aligners fit over a patient's teeth to apply forces that move the teeth from an original alignment to a desired alignment. In a treatment plan for an individual patient, depending on the amount of movement required, a number of aligners corresponding to different stages of alignment during the course of treatment may be used to move the teeth gradually from their original positions to the desired positions. This is because each aligner is limited in the amount of displacement that it can effect on the teeth.

Currently, to form a number of clear aligners for treatment of a single patient, an impression of the patient's teeth is first taken. The dental impression is scanned to obtain a digital model of the original alignment of the teeth. A treatment plan is then created, comprising a series of teeth digital models of the teeth at different stages of alignment between the original alignment and the desired alignment. A series of dental casts is then made, each corresponding to each of the teeth digital models in the treatment plan. The dental casts are typically made of a photopolymer using stereolithography followed by post-processing in which the dental casts may be washed with ethanol and post-cured with ultraviolet light. A series of aligners are then made from each of the dental casts. The aligners are typically made using thermoforming of a translucent biocompatible thermoplastic sheet onto the dental casts. Subsequently, the thermoformed thermoplastic sheets are removed from the dental casts and trimmed according to the teeth digital models using CNC machining and polished in order to form the aligners, before packaging, labelling and shipping to the patient.

Given the number of aligners required for each patent and the number of patients using such aligners internationally, it would be desirable to reduce the number of steps required to form each aligner to reduce manufacturing time and cost and also greatly reduce the logistical operations in the fabrication process.

US2017/0008333 A1 (Mason et al.) provides a dental appliance with a built-in ornament. The appliance may be a thermoformed sheet. Material is removed from the sheet, to create a groove or recess that is to house the ornament. The ornament may be a coloured liquid or a resin. After adding the ornament into the groove or recess, the groove or recess needs to be sealed. A clear coating or layer is provided over the openings in the dental appliance that provide the cavity for the ornament, i.e. over the area of the groove or recess, to achieve the necessary seal.

### SUMMARY

According to a first aspect, there is provided a method of forming an orthodontic aligner from an aligner digital model, the method comprising the steps of:
(a) three-dimensionally printing an intermediate structure comprising fused filaments from a biocompatible thermoplastic according to the aligner digital model via fused deposition modelling, in which the filaments are three-dimensionally printed onto each other, each filament having a width corresponding to a wall thickness of the orthodontic aligner and printed such that the wall thickness of the orthodontic aligner is printed in a single pass;
(b) coating the intermediate structure with a biocompatible translucent photopolymer; and
(c) irradiating the coating with ultraviolet light to cure the coating on the intermediate structure, thereby forming the orthodontic aligner.

The coating in step (b) may comprise dip-coating the intermediate structure in a bath of the biocompatible translucent photopolymer. Coating the intermediate structure with the biocompatible translucent photopolymer may comprise filling in spaces between adjacent fused filaments of the intermediate structure with the biocompatible translucent photopolymer, and creating a smooth surface of the intermediate structure, based on filling in the spaces.

According to a second aspect, there is provided an apparatus for forming an orthodontic aligner from an aligner digital model, the apparatus comprising: a three-dimensional printer configured to print an intermediate structure comprising fused filaments from a biocompatible thermoplastic according to the aligner digital model via fused deposition modelling, whereby the filaments are three-dimensionally printed onto each other, each filament having a width corresponding to a wall thickness of the orthodontic aligner, and printed such that the wall thickness of the orthodontic aligner is printed in a single pass; a coating bath configured to contain the biocompatible translucent photopolymer for dip-coating of the intermediate structure therein; and an ultraviolet light source configured to cure the coating on the intermediate structure to form the orthodontic aligner.

The printer may comprise a print head having a nozzle for dispensing the biocompatible thermoplastic, the nozzle having a width ranging from 0.3 mm to 0.6 mm.

For both the first and second aspects, the biocompatible thermoplastic may be one of: translucent and transparent after forming the orthodontic aligner, and wherein the biocompatible translucent photopolymer is one of translucent and transparent after forming the orthodontic aligner.

For the first and second aspects, the aligner digital model may be developed from a corresponding teeth digital model, wherein the teeth digital model is a digital model of a patient's teeth at one of a number of stages of alignment between an original alignment of the patient's teeth and a desired alignment of the patient's teeth.

### BRIEF DESCRIPTION OF FIGURES

In order that the invention may be fully understood and readily put into practical effect there shall now be described by way of non-limitative example only exemplary embodiments of the present invention, the description being with reference to the accompanying illustrative drawings.
- Fig. 1: is a flow chart illustrating a three-dimensional printing and coating process.
- Fig. 2a: is a schematic illustration of light passage through printed filaments of transparent thermoplastic having oblong cross-sections.
- Fig. 2b: is a schematic illustration of light passage through printed filaments of transparent thermoplastic having nearly circular cross-sections.
- Fig. 3: is a schematic illustration of light passage through printed filaments of transparent thermoplastic after application of a coating of a biocompatible translucent photopolymer.
- Fig. 4: is a photograph of a structure of printed filaments partially coated with the biocompatible translucent photopolymer.
- Fig. 5: is a schematic illustration of an apparatus for forming the orthodontic aligner.
- Fig. 6: is a schematic illustration of applying the coating of biocompatible translucent photopolymer by dip coating.
- Fig. 7: is a schematic illustration of applying the coating of biocompatible translucent photopolymer by spray coating.
- Fig. 8: is a schematic illustration of a pre-cut aligner sheet.
- Fig. 9: is an illustration of a thermoformed 3D aligner having an aligner edge requiring no trimming.
- Fig. 10: (prior art) is an illustration of a thermoformed 3D aligner having an aligner edge that requires trimming.
- Fig. 11: is a schematic illustration of thermoforming a pre-cut aligner sheet over a dental cast using a sealing sheet.
- Fig. 12: is a flowchart of a second exemplary method of forming an orthodontic aligner.
- Fig. 13: is a flowchart of a third exemplary method of forming an orthodontic aligner.

### DETAILED DESCRIPTION

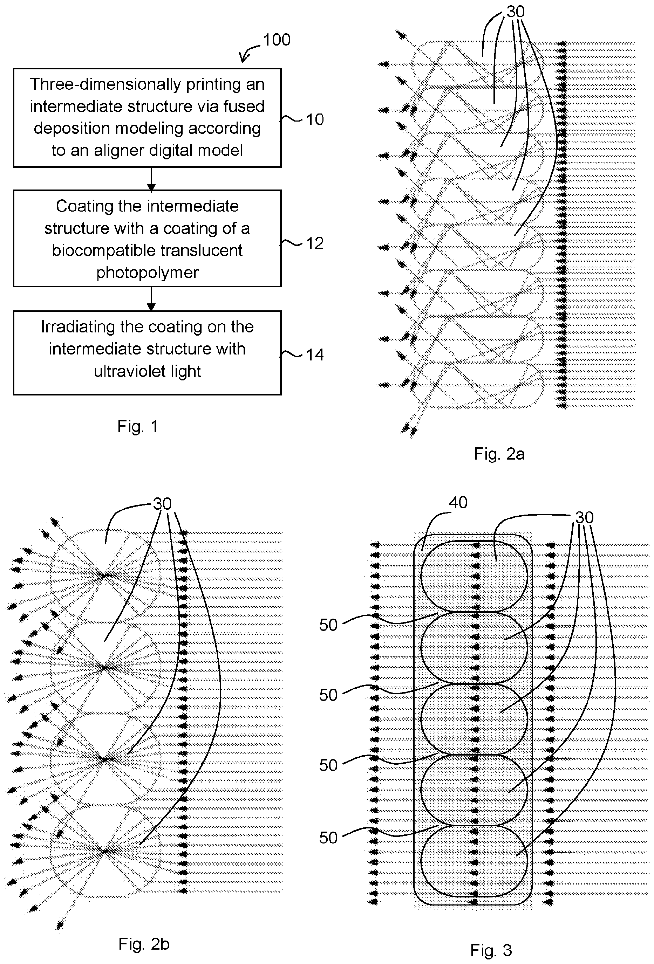

Exemplary methods 100, 300 which is not part of the claimed invention, 400 which is not part of the claimed invention, and apparatus 200 of forming an orthodontic aligner will be described below with reference to Figs. 1 to 13.

In a first exemplary method 100 of forming an orthodontic aligner, an intermediate structure 60 is three-dimensionally printed via fused deposition modelling (FDM) according to an aligner digital model (10), in which filaments of a biocompatible thermoplastic are three-dimensionally printed onto each other. The thermoplastic may comprise a grade of polyethylene terephthalate (PET) that is currently used in thermoforming of clear aligners. The thermoplastic is translucent or transparent after forming. The three-dimensional printing step is performed using an apparatus 200 configured to perform FDM.

The aligner digital model is a digital model of the orthodontic aligner that is to be formed in the method 100. The aligner digital model is developed from a teeth digital model using currently available software and techniques. The teeth digital model is a digital model of the patient's teeth at one of a number of stages of alignment between an original alignment of the patient's teeth (before treatment) and a desired alignment of the patient's teeth (after treatment with one or more aligners). The teeth digital model is part of a treatment plan for the patient and is developed from a digital model of the original alignment of the patient's teeth using current methods. The digital model of the original alignment of the teeth may be obtained by methods such as scanning a dental impression of the patient or scanning the patient intra-orally using currently known methods.

The printed intermediate structure 60 comprising fused filaments 30 is generally of the shape of the aligner digital model. Each printed filament 30 preferably has a width corresponding to a wall thickness of the aligner to be formed, so that the wall thickness of the aligner may be printed in a single pass of a printer head 210 of the apparatus 200. Accordingly, a nozzle 220 of the printer head 210 that dispenses the biocompatible thermoplastic may have a nozzle width ranging from 0.3 to 0.6 mm, preferably 0.4 to 0.5mm.

The printed intermediate structure 60 lacks optical clarity because the fused filaments 30 each have a curved cross-sectional profile, typically comprising a cylindrical or oblong cross-section that refract and diffuse light, as shown in Figs. 2a and 2b. To achieve translucency in the formed aligner, the intermediate structure 60 is coated with a coating 40 of a biocompatible translucent photopolymer 40 (12) that is translucent or transparent after forming. An example of the biocompatible translucent photopolymer 40 that may be used as a coating 40 is Model Ortho produced by NextDent^{®}. The coating 40 fills in the spaces 50 between adjacent filaments 30 of the intermediate structure 60, as shown in Fig. 3, thereby smoothening out the surface of the intermediate structure 60.

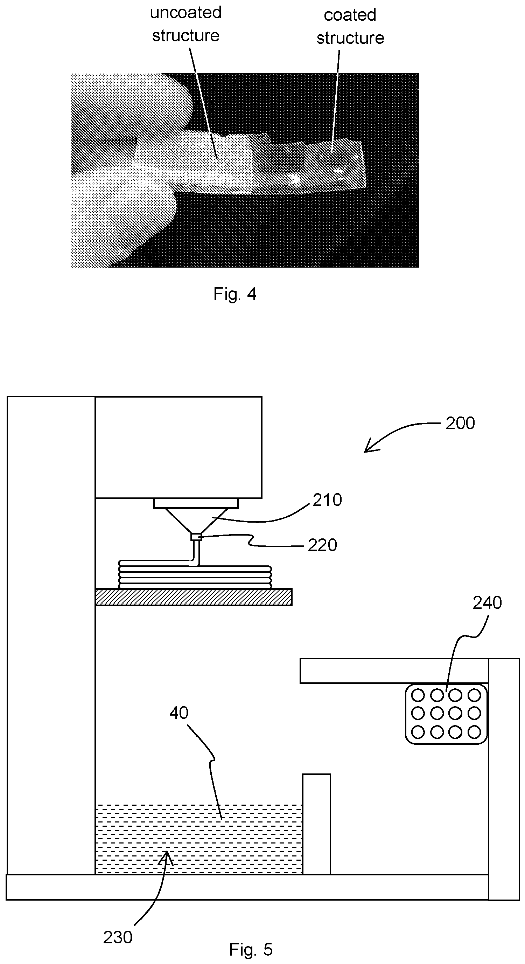

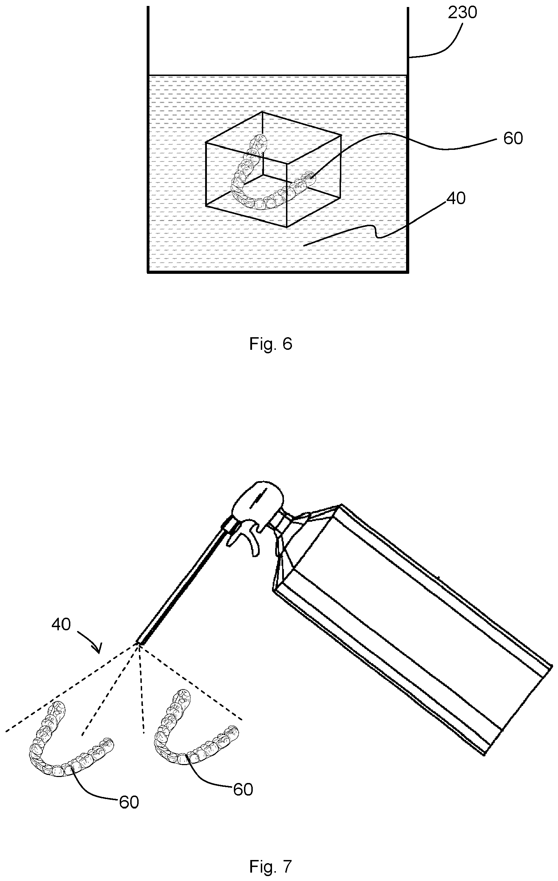

The apparatus 200 as shown in Fig. 5 is configured to perform coating of the intermediate structure 60, and may comprise a coating bath 230 configured to contain the biocompatible translucent photopolymer 40. The apparatus 200 may be configured to automatically perform dip-coating of the intermediate structure 60 in the bath 230 of translucent photopolymer 40 after printing the intermediate structure 60, as shown in Fig. 6. Alternatively, the intermediate structure 60 may be spray coated with the biocompatible translucent photopolymer 40 as shown in Fig. 7. One or more units of the intermediate structure 60 may be coated at the same time, whether by dip coating or spray coating.

The coating 40 on the intermediate structure 60 is subsequently irradiated with ultraviolet light (14), to cure the coating 40. The apparatus 200 preferably comprises an ultraviolet light source 240 configured to perform the ultraviolet light irradiation. After UV curing, the formed aligner is translucent or transparent, as shown in Figs. 3 and 4, as a result of the coating 40 forming a smooth surface over the printed filaments 30 of the intermediate structure 60 that reduces refraction and diffusion of light.

Using the method 100 and apparatus 200 described above, orthodontic aligners may be expeditiously formed directly from aligner digital models, without requiring the fabrication of dental casts in order to thermoform the aligners on the dental casts. In this way, manufacturing cost and time can be drastically reduced since stereolithographic forming of dental casts from the aligner digital models is no longer required.

A major advantage of the presently disclosed method 100 and apparatus 200 is that they allow the orthodontic aligner to be designed for greater clinical efficacy, as different parts of the orthodontic aligner can be formed to have different thicknesses using the method 100 and apparatus 200. For example, certain areas may be formed to be thicker to apply more pressure or improve stiffness at those areas, while other areas may be made thinner and more flexible. This can be customised to individual patient requirements, for example, to move the front teeth by forming the front part of the aligner to be stiffer and thicker, while leaving the molars stationary with the aligner being thinner and therefore more comfortable where it covers the molars. Such advantageous variable thickness in a single orthodontic aligner cannot be obtained using current processes where thickness of the aligner is uniform throughout, the thickness being equal to that of the sheet of plastic that is currently thermoformed over the dental cast.

### Pre-Cut Aligner Sheet

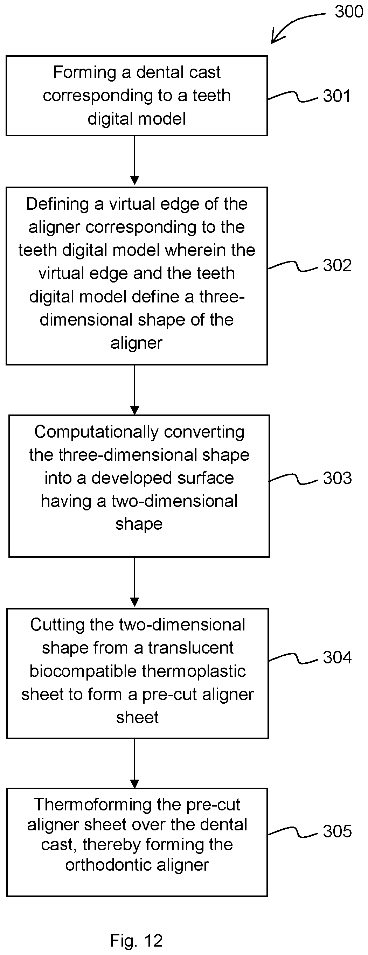

A second exemplary method 300 which is not part of the claimed invention, (Fig. 12) of forming orthodontic aligners over the currently used thermoforming method is also disclosed. The improved method which is not part of the claimed invention, comprises first taking an impression of the patient's teeth and scanning the dental impression to obtain a digital model of the original alignment of the teeth. A treatment plan is then created, comprising a series of teeth digital models of the teeth at different stages of alignment between the original alignment and a desired alignment. A series of dental casts is made, each corresponding to each of the teeth digital models in the treatment plan (301). The dental casts are typically made of a photopolymer using stereolithography followed by post-processing in which the dental casts may be washed with ethanol and post-cured with ultraviolet light.

For each of the teeth digital models, a virtual edge of a three-dimensional (3D) aligner corresponding to each of the teeth digital models can be defined. This can be done by defining a line that is displaced below a gingival line of the teeth digital model around the teeth digital model. The displacement may be 2mm or as otherwise desired. The virtual edge and teeth digital model above the virtual edge thus define a 3D shape of the aligner (302). The 3D shape is computationally converted into a developed surface having a two-dimensional (2D) shape (303). This may be performed using an appropriate surface development algorithm that maps the virtual edge into a perimeter of a 2D developed surface.

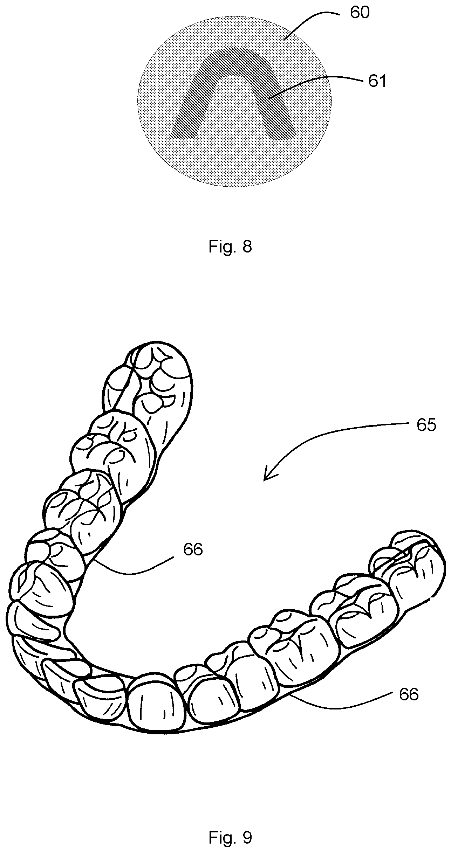

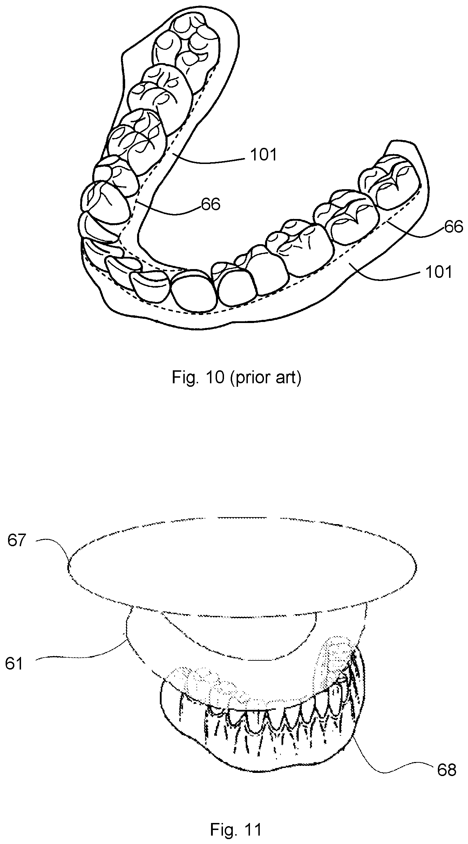

The 2D shape is then cut from a translucent biocompatible thermoplastic sheet 60 to form a pre-cut aligner sheet 61, as shown in Fig. 8 (304). When the pre-cut aligner sheet 61 is thermoformed over the dental cast of the corresponding teeth digital model, the 3D aligner 65 is formed (305) having an aligner edge 66 as shown in Fig. 9 that corresponds to the virtual edge defined using the teeth digital model, as described above. This eliminates the need for a further trimming step to be performed on the thermoformed aligner 65 as no excess material extends beyond the desired aligner edge 66. On the contrary, in the current method where a thermoplastic sheet that is significantly larger than the aligner is thermoformed over the dental cast, trimming away of the excess material 101 that extends beyond the desired aligner edge 66 as shown in Fig. 10 is needed in order to form the actual aligner. In this way, the improved method removes the trimming step from the current aligner forming method, thus saving time and cost.

To effectively thermoform the pre-cut aligner sheet 61 over the dental cast, a sealing sheet 67 may be used over the pre-cut aligner sheet 61 to create the vacuum seal around the dental cast 68, as shown in Fig. 11. During thermoforming, the pre-cut aligner sheet 61 is first held in place under the sealing sheet 67 and over the dental cast 68. The sealing sheet 67 with the pre-cut aligner sheet 61 is then pulled down over the dental cast 68 using the vacuum pressure in order for the pre-cut aligner sheet 61 to take the shape of the dental cast 68 under heat. The sealing sheet 67 is preferably pliable and of a non-stick material in order to be readily released from the thermoformed aligner 65 and reusable over many cycles.

### Injection Moulding

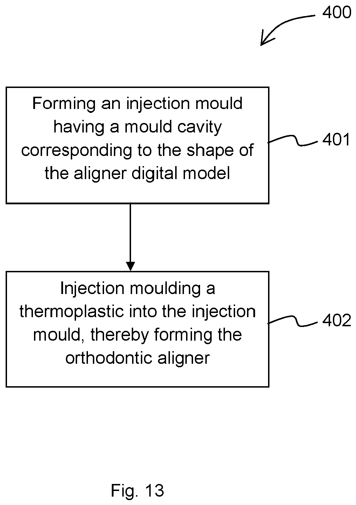

A third exemplary method 400 which is not part of the claimed invention, of forming orthodontic aligners is disclosed, as shown in Fig. 13. The alternative method which is not part of the claimed invention, comprises first taking an impression of the patient's teeth and scanning the dental impression to obtain a digital model of the original alignment of the teeth. A treatment plan is then created, comprising a series of teeth digital models of the teeth at different stages of alignment between the original alignment and a desired alignment. For each teeth digital model, a corresponding aligner digital model is developed for the treatment plan.

A series of injection moulds is then made, each injection mould comprising a mould cavity corresponding to the shape of an aligner digital model in the treatment plan (401). Each injection moulds is preferably made from a photopolymer using stereolithography followed by post-processing by washing with ethanol and post-curing with ultraviolet light.

Using the injection moulds, conventional injection moulding may be performed to obtain injection-moulded aligners (402). Appreciably, one injection mould may comprise a single block having a number of aligner-shaped cavities therein, so that a single injection moulding shot can produce a number of aligners at once.

Whilst there has been described in the foregoing description exemplary embodiments of the present invention, it will be understood by those skilled in the technology concerned that many variations and combination in details of design, construction and/or operation may be made without departing from the scope of the present invention defined by the appended claims. For example, while PET has been mentioned above as a possible biocompatible thermoplastic to be used, other options for the biocompatible polymer include nylon and polylactic acid (PLA).

## Claims

1. A method of forming an orthodontic aligner from an aligner digital model, the method comprising the steps of:
(a) three-dimensionally printing (100) an intermediate structure (60) comprising fused filaments (30) from a biocompatible thermoplastic according to the aligner digital model via fused deposition modelling, in which the filaments (30) are three-dimensionally printed onto each other, each filament (30) having a width corresponding to a wall thickness of the orthodontic aligner and printed such that the wall thickness of the orthodontic aligner is printed in a single pass;
(b) coating (12) the intermediate structure (60) with a biocompatible translucent photopolymer; and
(c) irradiating (14) the coating (40) with ultraviolet light to cure the coating (40) on the intermediate structure (60), thereby forming the orthodontic aligner.

2. The method of claim 1, wherein the biocompatible thermoplastic is one of translucent and transparent after forming the orthodontic aligner, and wherein the biocompatible translucent photopolymer is one of translucent and transparent after forming the orthodontic aligner.

3. The method of claim 1, wherein the aligner digital model is developed from a teeth digital model, and wherein the teeth digital model is a digital model of a patient's teeth at one of a number of stages of alignment between an original alignment of the patient's teeth and a desired alignment of the patient's teeth.

4. The method of claim 1, wherein the coating (12) comprises dip-coating the intermediate structure (60) in a bath of the biocompatible translucent photopolymer.

5. The method of claim 1, wherein coating (12) the intermediate structure (60) with the biocompatible translucent photopolymer comprises:
filling in spaces between adjacent fused filaments (30) of the intermediate structure with the biocompatible translucent photopolymer; and
creating a smooth surface of the intermediate structure (60), based on filling in the spaces.

6. An apparatus (200) for forming an orthodontic aligner from an aligner digital model, the apparatus comprising:
a three-dimensional printer configured to print an intermediate structure (60) comprising fused filaments (30) from a biocompatible thermoplastic according to the aligner digital model via fused deposition modelling, whereby the filaments (30) are three-dimensionally printed (10) onto each other, each filament (30) having a width corresponding to a wall thickness of the orthodontic aligner and printed (10) such that the wall thickness of the orthodontic aligner is printed in a single pass;
a coating bath (230) configured to contain the biocompatible translucent photopolymer for dip-coating of the intermediate structure (60) therein; and
an ultraviolet light source (240) configured to cure (14) the coating (40) on the intermediate structure (60) to form the orthodontic aligner.

7. The apparatus (200) of claim 6, wherein the printer comprises a print head (210) having a nozzle (220) for dispensing the biocompatible thermoplastic, the nozzle having a width ranging from 0.3 mm to 0.6 mm.

8. The apparatus (200) of claim 6, wherein the biocompatible thermoplastic is one of translucent and transparent after forming the orthodontic aligner, and wherein the biocompatible translucent photopolymer is one of translucent and transparent after forming the orthodontic aligner.

## Patentansprüche

1. Verfahren zum Bilden einer kieferorthopädischen Ausrichtvorrichtung aus einem digitalen Ausrichtvorrichtungsmodell, wobei das Verfahren die folgenden Schritte umfasst:
(a) dreidimensionales Drucken (100) einer Zwischenstruktur (60), die fusionierte Filamente (30) umfasst, aus einem biokompatiblen Thermoplast gemäß dem digitalen Ausrichtvorrichtungsmodell mittels Modellierung durch fusionierte Abscheidung, wobei die Filamente (30) dreidimensional aufeinander gedruckt sind, wobei jedes Filament (30) eine Breite aufweist, die einer Wanddicke der kieferorthopädischen Ausrichtvorrichtung entspricht, und derart gedruckt ist, dass die Wanddicke der kieferorthopädischen Ausrichtvorrichtung in einem einzigen Durchgang gedruckt wird;
(b) Beschichten (12) der Zwischenstruktur (60) mit einem biokompatiblen transluzenten Fotopolymer; und
(c) Bestrahlen (14) der Beschichtung (40) mit ultraviolettem Licht, um die Beschichtung (40) an der Zwischenstruktur (60) zu härten, wodurch die kieferorthopädische Ausrichtvorrichtung gebildet wird.

2. Verfahren nach Anspruch 1, wobei der biokompatible Thermoplast nach dem Bilden der kieferorthopädischen Ausrichtvorrichtung eines von transluzent und transparent ist und wobei das biokompatible transluzente Fotopolymer nach dem Bilden der kieferorthopädischen Ausrichtvorrichtung eines von transluzent und transparent ist.

3. Verfahren nach Anspruch 1, wobei das digitale Ausrichtvorrichtungsmodell aus einem digitalen Zahnmodell entwickelt wird und wobei das digitale Zahnmodell ein digitales Modell der Zähne eines Patienten in einem von einer Anzahl von Ausrichtungsstadien zwischen einer ursprünglichen Ausrichtung der Zähne des Patienten und einer gewünschten Ausrichtung der Zähne des Patienten ist.

4. Verfahren nach Anspruch 1, wobei das Beschichten (12) Eintauchbeschichten der Zwischenstruktur (60) in einem Bad des biokompatiblen transluzenten Fotopolymers umfasst.

5. Verfahren nach Anspruch 1, wobei das Beschichten (12) der Zwischenstruktur (60) mit dem biokompatiblen transluzenten Fotopolymer Folgendes umfasst:
Füllen von Zwischenräumen zwischen benachbarten fusionierten Filamenten (30) der Zwischenstruktur mit dem biokompatiblen transluzenten Fotopolymer; und
Erzeugen einer glatten Fläche der Zwischenstruktur (60) auf Grundlage des Füllens der Zwischenräume.

6. Vorrichtung (200) zum Bilden einer kieferorthopädischen Ausrichtvorrichtung aus einem digitalen Ausrichtvorrichtungsmodell, wobei die Vorrichtung Folgendes umfasst:
einen dreidimensionalen Drucker, der dazu konfiguriert ist, eine Zwischenstruktur (60), die fusionierte Filamente (30) umfasst, aus einem biokompatiblen Thermoplast gemäß dem digitalen Ausrichtvorrichtungsmodell mittels Modellierung durch fusionierte Abscheidung zu drucken, wodurch die Filamente (30) dreidimensional aufeinander gedruckt (10) sind, wobei jedes Filament (30) eine Breite aufweist, die einer Wanddicke der kieferorthopädischen Ausrichtvorrichtung entspricht, und derart gedruckt (10) ist, dass die Wanddicke der kieferorthopädischen Ausrichtvorrichtung in einem einzigen Durchgang gedruckt wird;
ein Beschichtungsbad (230), das dazu konfiguriert ist, das biokompatible transluzente Fotopolymer zur Eintauchbeschichtung der Zwischenstruktur (60) darin zu enthalten; und
ein Quelle für ultraviolettes Licht (240), die dazu konfiguriert ist, die Beschichtung (40) an der Zwischenstruktur (60) zu härten (14), um die kieferorthopädische Ausrichtvorrichtung zu bilden.

7. Vorrichtung (200) nach Anspruch 6, wobei der Drucker einen Druckkopf (210) umfasst, der eine Düse (220) zum Ausgeben des biokompatiblen Thermoplasten aufweist, wobei die Düse eine Breite im Bereich von 0,3 mm bis 0,6 mm aufweist.

8. Vorrichtung (200) nach Anspruch 6, wobei der biokompatible Thermoplast nach dem Bilden der kieferorthopädischen Ausrichtvorrichtung eines von transluzent und transparent ist und wobei das biokompatible transluzente Fotopolymer nach dem Bilden der kieferorthopädischen Ausrichtvorrichtung eines von transluzent und transparent ist.

## Revendications

1. Procédé de formation d'un aligneur orthodontique à partir d'un modèle numérique d'aligneur, le procédé comprenant les étapes :
(a) d'impression en trois dimensions (100) d'une structure intermédiaire (60) comprenant des filaments fondus (30) à partir d'un thermoplastique biocompatible selon le modèle numérique d'aligneur via une modélisation par dépôt fondu, dans lequel les filaments (30) sont imprimés en trois dimensions les uns sur les autres, chaque filament (30) ayant une largeur correspondant à une épaisseur de paroi de l'aligneur orthodontique et étant imprimé de sorte que l'épaisseur de paroi de l'aligneur orthodontique est imprimée en un seul passage ;
(b) de revêtement (12) de la structure intermédiaire (60) avec un photopolymère translucide biocompatible ; et
(c) d'irradiation (14) du revêtement (40) avec une lumière ultraviolette pour durcir le revêtement (40) sur la structure intermédiaire (60), formant ainsi l'aligneur orthodontique.

2. Procédé selon la revendication 1, dans lequel le thermoplastique biocompatible est translucide ou transparent après formation de l'aligneur orthodontique, et dans lequel le photopolymère translucide biocompatible est translucide ou transparent après formation de l'aligneur orthodontique.

3. Procédé selon la revendication 1, dans lequel le modèle numérique d'aligneur est développé à partir d'un modèle numérique de dents, et dans lequel le modèle numérique de dents est un modèle numérique des dents d'un patient à l'un d'un certain nombre d'étapes d'alignement entre un alignement original des dents du patient et un alignement souhaité des dents du patient.

4. Procédé selon la revendication 1, dans lequel le revêtement (12) comprend le revêtement par immersion de la structure intermédiaire (60) dans un bain de photopolymère translucide biocompatible.

5. Procédé selon la revendication 1, dans lequel le revêtement (12) de la structure intermédiaire (60) avec le photopolymère translucide biocompatible comprend :
le remplissage d'espaces entre les filaments fusionnés adjacents (30) de la structure intermédiaire avec le photopolymère translucide biocompatible ; et
la création d'une surface lisse de la structure intermédiaire (60), sur la base du remplissage des espaces.

6. Appareil (200) de formation d'un aligneur orthodontique à partir d'un modèle numérique d'aligneur, l'appareil comprenant :
une imprimante tridimensionnelle configurée pour imprimer une structure intermédiaire (60) comprenant des filaments fondus (30) à partir d'un thermoplastique biocompatible selon le modèle numérique d'aligneur via une modélisation par dépôt fondu, moyennant quoi les filaments (30) sont imprimés en trois dimensions (10) les uns sur les autres, chaque filament (30) ayant une largeur correspondant à une épaisseur de paroi de l'aligneur orthodontique et imprimé (10) de sorte que l'épaisseur de paroi de l'aligneur orthodontique est imprimée en un seul passage ;
un bain de revêtement (230) conçu pour contenir le photopolymère translucide biocompatible pour le revêtement par immersion de la structure intermédiaire (60) ; et
une source de lumière ultraviolette (240) conçue pour durcir (14) le revêtement (40) sur la structure intermédiaire (60) afin de former l'aligneur orthodontique.

7. Appareil (200) selon la revendication 6, dans lequel l'imprimante comprend une tête d'impression (210) possédant une buse (220) pour distribuer le thermoplastique biocompatible, la buse présentantune largeur allant de 0,3 mm à 0,6 mm.

8. Appareil (200) selon la revendication 6, dans lequel le thermoplastique biocompatible est translucide ou transparent après formation de l'aligneur orthodontique, et dans lequel le photopolymère translucide biocompatible est translucide ou transparent après formation de l'aligneur orthodontique.
